# EUROPEAN PATENT SPECIFICATION

(11) **EP 4 311 665 B1**
(45) Date of publication and mention of the grant of the patent: **09.09.2026**
(21) Application number: 23188294.5
(22) Date of filing: 28.07.2023
(51) Int. Cl.: B32B 5/02, B32B 5/12, B32B 5/26, B32B 15/02, B32B 15/20

(54) **FIBER COMPOSITE MATERIAL, MANUFACTURING METHOD THEREFOR, AND FLYING OBJECT**
FASERVERBUNDWERKSTOFF, HERSTELLUNGSVERFAHREN DAFÜR UND FLUGOBJEKT
MATÉRIAU COMPOSITE À BASE DE FIBRES, SON PROCÉDÉ DE FABRICATION ET OBJET VOLANT

(30) Priority: 29.07.2022 JP 2022121043
(43) Date of publication of application: 31.01.2024
(73) Proprietor: HONDA MOTOR CO., LTD., Tokyo 105-8404 (JP)
(72) Inventor: Iwadate, Hitoshi, Saitama 351-0193 (JP)
(74) Representative: Weickmann & Weickmann PartmbB

(56) References cited:
- WO-A1-2019/227474
- US-A1- 2020 307 162
- US-A1- 2020 368 998

## Description

### BACKGROUND OF THE INVENTION

### FIELD OF THE INVENTION

The present invention relates to a fiber composite material and a manufacturing method therefor. Further, the present invention relates to a flying object equipped with a fiber composite material as a lightning protection structure.

### DESCRIPTION OF THE RELATED ART

In order to reduce the weight of flying objects such as airplanes, drones, and the like, in recent times, the surface structural material of such flying objects has been constituted by a carbon fiber reinforced composite resin (CFRP). Incidentally, during flight, the flying object may be struck by lightning. As a countermeasure against such an occurrence, the flying object is equipped with a lightning protection structure. The lightning protection structure, for example, is a conductor that is provided on the surface structural material. The lightning current is conveyed through the conductor, and is quickly guided to a static discharger and discharged into the air.

As the conductor, for example, a metal mesh as described in JP 2020-059841 A is employed. It should be noted that it is difficult to attach the metal mesh to the surface structural material. Thus, in JP 2020-059841 A, a layered integrated surface protection system is provided in which a metal mesh (a conductor) is impregnated with a matrix resin in which reinforcing fibers are dispersed. Such an integrated surface protection system is attached to a surface structural material such as an airplane or a spacecraft or the like.

The surface structural material is a composite material substrate made from a fiber reinforced resin. More specifically, due to the above-described attachment, a composite material structure is formed comprising the composite material substrate, and the integrated surface protection system. In such a composite material structure, the integrated surface protection system is laminated on the surface of the composite material substrate. According to the disclosure of JP 2020-059841 A, the reinforcing fibers are chopped fibers, and serve to impart strength to the integrated surface protection system. Further, the reinforcing fibers also enhance environmental resistance to temperature cycling in the integrated surface protection system.

The general technical background of the invention also includes US 2020/307162 A1.

### SUMMARY OF THE INVENTION

In a conventional technique, a laminated structure made up of the surface structural material and the conductor is obtained by joining together the surface structural material and the conductor, for example, in the following manner. First, a prepreg laminated body is obtained by laminating a plurality of individual prepregs. Separately, a composite body made of a metal mesh and a resin film is manufactured. Specifically, initially, the resin film is placed on one end surface of the metal mesh. Next, the resin film is overlaid within mesh openings of the metal mesh, and the resin film is made to enter (is impregnated into) the mesh. In accordance therewith, the composite body is obtained. Surplus resin film covers the front surface and the rear surface of the metal mesh.

Next, the composite body is placed on an end surface of the prepreg laminated body that will become the outer surface of the surface structural material. Consequently, a preliminary laminated body made up of the surface structural material and the composite body is obtained. Next, for example, co-curing is carried out on the preliminary laminated body. By heat being applied at this time, the matrix resin in the plurality of individual prepregs is cured and the individual prepregs are bonded to each other. Further, by the resin film being cured at the same time, the composite body is bonded to the prepreg that is positioned immediately below the composite body.

In the foregoing manner, by the plurality of the prepregs being bonded to each other via the matrix resin, the surface structural material made up from the fiber reinforced resin is formed. Further, the surface structural material and the conductor are bonded together via the resin film. In other words, the resin film acts as a binding resin. The matrix resin and the resin film are interposed between a topmost fiber layer of the surface structural material and the conductor.

In this case, because the resin film is high in cost, the material cost is increased. Further, because a comparatively large amount of the resin film must be used, it is not easy to make such a lightning protection structure both thinner and lighter in weight.

The present invention has the object of solving the aforementioned problem.

In the following there is provided a fiber composite material comprising: a base material made from a carbon fiber reinforced resin including a first matrix resin; and a composite layer laminated on the base material, wherein the composite layer includes a fiber layer made from carbon fibers, a conductive layer made from a conductor and superimposed on the fiber layer, and a second matrix resin impregnated into the fiber layer and the conductive layer, each of the first matrix resin and the second matrix resin is formed from an epoxy resin, the second matrix resin includes a first resin portion impregnated into the fiber layer, and a second resin portion impregnated into the conductive layer, the second matrix resin being a single resin layer in which an interface does not exist between the first resin portion and the second resin portion, the fiber layer is positioned between the conductive layer and the base material, the composite layer is bonded to the base layer via the second matrix resin, and an amount of the second matrix resin is in a range of 120 g to 275 g per 1 m² of the composite layer.

According to one embodiment of the present invention, there is provided a method of manufacturing a fiber composite material including a base material made from a carbon fiber reinforced resin, the method of manufacturing the fiber composite material comprising a step of obtaining the base material in which a first matrix resin is impregnated into a carbon fiber, a step of obtaining a composite layer including a fiber layer that is a woven fabric made from carbon fibers, a conductive layer made from a conductor and superimposed on the fiber layer, and a second matrix resin made up from a single resin layer impregnated into the fiber layer and the conductive layer, a step of laminating the composite layer on the base material including the first matrix resin, in a manner so that the fiber layer is positioned between the conductive layer and the base material, and a step of bonding the base material including the first matrix resin and the composite layer including the second matrix resin via the second matrix resin.

The conductive layer may be in contact with the fiber layer. Herein, the phrase "the conductive layer is in contact with the fiber layer" indicates that at least a portion of the conductive layer is in contact with the fiber layer. More specifically, a state in which "the conductive layer is in contact with the fiber layer" includes a state in which the entirety of the conductive layer is in contact with the fiber layer. Further, the state in which "the conductive layer is in contact with the fiber layer" includes a state in which a portion of the conductive layer is in contact with a portion of the fiber layer, and in which the matrix resin is interposed between the remainder portion of the fiber layer and the remainder portion of the conductive layer.

A flying object is described, comprising: a surface structural material containing the base material and the fiber layer; and a lightning protection structure containing the conductive layer.

In the composite layer of the present invention, the fiber layer and the conductive layer are impregnated with a matrix resin that forms a single layer. The matrix resin acts as a binding resin that bonds the composite layer to the base material layer. In this case, the amount of the binding resin used can be made smaller than the amount of a resin film that is used when the conductor is bonded to the surface structural material by the resin film. This is because, since the matrix resin (the binding resin) is impregnated into the fiber layer and the conductive layer which are in contact with each other to thereby obtain the composite layer (a composite prepreg), it is not necessary to obtain a composite body using the resin film and the conductor. Accordingly, it is easy to make the fiber composite material both thinner and lighter in weight.

As the binding resin, it is possible to select a matrix resin in a general prepreg. Such a matrix resin is comparatively inexpensive. Further, in the manner described above, the amount of the binding resin that is used is small. For the foregoing reasons, the material cost can be made inexpensive.

In addition, since the matrix resin of the composite layer is bound to the base material, the bonding strength between the base material and the composite layer is high. Accordingly, the fiber composite material is superior in terms of strength and durability.

Furthermore, the composite layer includes the conductive layer. Therefore, for example, at a time when the fiber composite material is struck by lightning, the lightning current will be conveyed and flow through the conductive layer. In accordance with this feature, the fiber composite material is prevented from being damaged due to being struck by lightning.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic perspective view of a multicopter which serves as a flying object ;
FIG. 2 is a schematic cross-sectional view of principal components of a fiber composite material constituting an outermost part of a multicopter, when viewed along a thickness direction thereof;
FIG. 3 is an exploded perspective view of principal components of the fiber composite material;
FIG. 4 is a schematic cross-sectional view of a composite layer that constitutes the fiber composite material, when viewed along a thickness direction thereof;
FIG. 5 is a schematic side view of a non-woven fabric whose surface is coated with a metal, when viewed along a thickness direction thereof;
FIG. 6 is a schematic flow diagram of a method of manufacturing the fiber composite material;
FIG. 7 is a schematic side view of a base material that constitutes the fiber composite material, when viewed along a thickness direction thereof;
FIG. 8 is a schematic flow diagram showing an example of a process (a first step) for obtaining a composite layer;
FIG. 9 is a schematic side view of a preliminary laminated body used in order to obtain the composite layer, when viewed along a thickness direction thereof;
FIG. 10 is a schematic side view showing a state in which one pair of rollers presses the preliminary laminated body, after a binding resin has been supplied to both end surfaces of the preliminary laminated body; and
FIG. 11 is a schematic side view of a molding material used in order to obtain the fiber composite material, when viewed along a thickness direction.

### DETAILED DESCRIPTION OF THE INVENTION

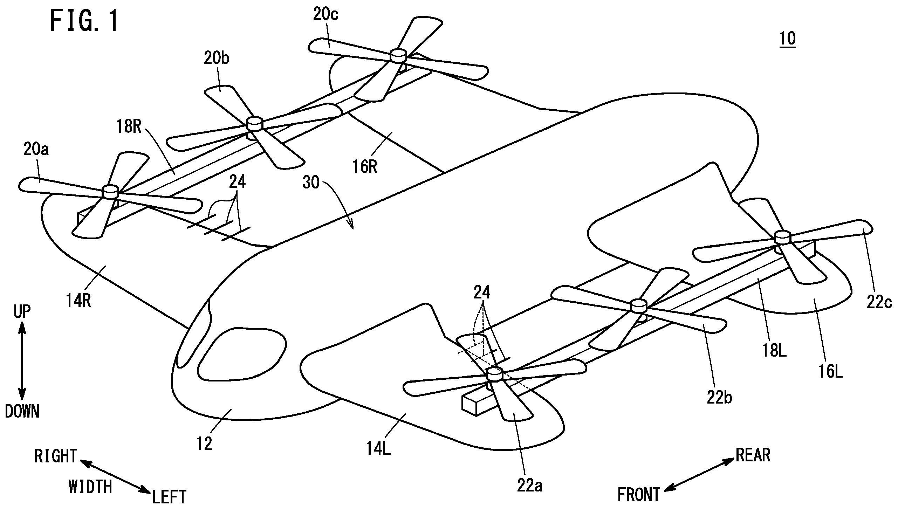

FIG. 1 is a schematic perspective view of a multicopter 10 which serves as a flying object . The multicopter 10 is equipped with a fuselage 12. A left main wing 14L and a right main wing 14R project out respectively in a widthwise direction from a left front side portion and a right front side portion of the fuselage 12. A left horizontal stabilizer 16L and a right horizontal stabilizer 16R project out respectively in a widthwise direction from a left rear side portion and a right rear side portion of the fuselage 12. A left support bar 18L straddles the left main wing 14L and the left horizontal stabilizer 16L. A right support bar 18R straddles the right main wing 14R and the right horizontal stabilizer 16R.

A propeller 20a, a propeller 20b, and a propeller 20c are provided respectively on the right main wing 14R, the right support bar 18R, and the right horizontal stabilizer 16R. A propeller 22a, a propeller 22b, and a propeller 22c are provided respectively on the left main wing 14L, the left support bar 18L, and the left horizontal stabilizer 16L. These six individual propellers 20a to 20c and 22a to 22c serve as lift generating devices. Accompanying the six propellers 20a to 20c and 22a to 22c being made to rotate, the multicopter 10 takes off and flies through the air.

For example, a plurality of static dischargers 24 are provided on the left main wing 14L and the right main wing 14R. Since the static dischargers 24 are well known, a detailed description of them will be omitted herein. The static dischargers 24 may also be provided at locations other than on the left main wing 14L and the right main wing 14R.

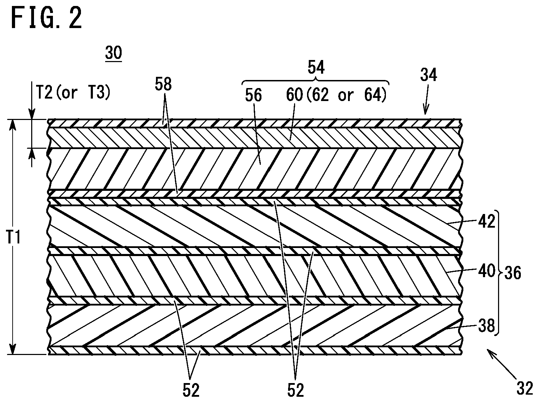

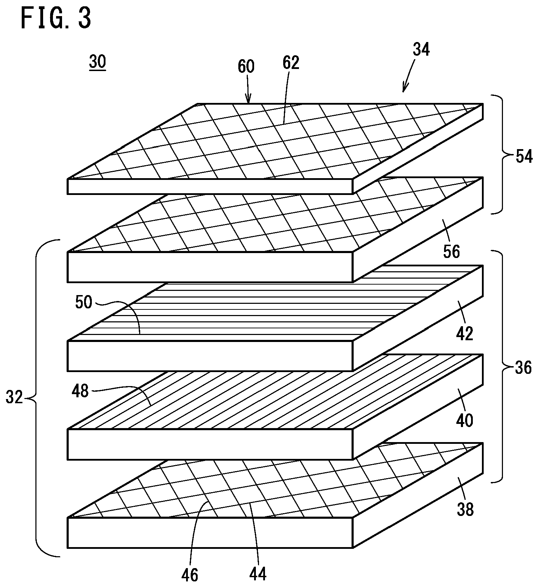

FIG. 2 is a schematic cross-sectional view of principal components of an outermost part of the multicopter 10, when viewed along a thickness direction thereof. FIG. 3 is an exploded perspective view of principal components of the outermost part. The direction toward the lower side of FIG. 2 and FIG. 3 is a direction toward an inner portion of the multicopter 10, and the direction toward the upper side of FIG. 2 and FIG. 3 is a direction toward an outer portion of the multicopter 10. As shown in FIG. 2 and FIG. 3, the outermost part of the multicopter 10 is formed by a fiber composite material 30. Moreover, although in FIG. 2 and FIG. 3, the shape of the fiber composite material 30 is shown in a simplified manner in order to facilitate understanding, the actual fiber composite material 30 is formed into an appropriate shape that fits with the outer shape of the multicopter 10. Further, in FIG. 3, a first matrix resin 52 and a second matrix resin 58 (for either case, refer to FIG. 2), which will be described later, are omitted from illustration.

The fiber composite material 30 is equipped with a surface structural material 32 and a lightning protection structure 34. The surface structural material 32 includes a base material 36 made from a carbon fiber reinforced resin. In this case, the base material 36 includes a cloth layer 38, a first UD (unidirectional) layer 40, and a second UD (unidirectional) layer 42. As shown in FIG. 3, the cloth layer 38 is a so-called fabric material, which is a layered fabric (a carbon fiber cloth) made up of first carbon fibers 44 in the form of a warp, and second carbon fibers 46 in the form of a weft, the first carbon fibers 44 and the second carbon fibers 46 intersecting one another at an angle of approximately 90°. The weaving method is not particularly limited, and may be a plain weave, a twill weave, or a satin weave.

In the first UD layer 40, carbon fibers 48 are aligned in one direction. The one direction, for example, is an upper-lower direction of the multicopter 10. Alternatively, the one direction is a front-rear direction of the multicopter 10. The first UD layer 40 exhibits superior strength along the direction in which the carbon fibers 48 are aligned.

In the second UD layer 42, carbon fibers 50 are aligned in one direction that differs from that in which the carbon fibers 48 in the first UD layer 40 are aligned. When the carbon fibers 48 in the first UD layer 40 are aligned along the upper-lower direction of the multicopter 10, the carbon fibers 50 in the second UD layer 42, for example, are aligned along the front-rear direction of the multicopter 10. When the carbon fibers 48 in the first UD layer 40 are aligned along the front-rear direction of the multicopter 10, the carbon fibers 50 in the second UD layer 42, for example, are aligned along the upper-lower direction of the multicopter 10. In either of these cases, the angle of intersection between the alignment direction of the carbon fibers 48 in the first UD layer 40 and the alignment direction of the carbon fibers 50 in the second UD layer 42 is approximately 90°.

Alternatively, it is possible for the angle of intersection between the alignment direction of the carbon fibers 48 in the first UD layer 40 and the alignment direction of the carbon fibers 50 in the second UD layer 42 to be approximately 45°. In this case, for example, the carbon fibers 48 in the first UD layer 40 may be aligned along the front-rear, or alternatively, along the upper-lower direction of the multicopter 10. In addition, the alignment direction of the carbon fibers 50 in the second UD layer 42 may be inclined at approximately 45° with respect to the front-rear direction and the upper-lower direction of the multicopter 10. The respective directions of alignment of the carbon fibers 48 and 50 in the first UD layer 40 and the second UD layer 42 may be reversed from that stated above. In the foregoing manner, it is preferable to laminate the first UD layer 40 and the second UD layer 42 on one another, in a manner so that the directions of alignment or the angles of the carbon fibers 48 in the first UD layer 40 and the carbon fibers 50 in the second UD layer 42 are different.

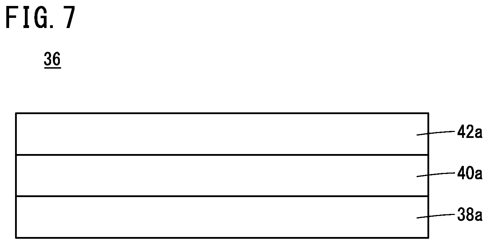

The first matrix resin 52 shown in FIG. 2 is impregnated into the first carbon fibers 44 and the second carbon fibers 46 in the cloth layer 38, the carbon fibers 48 in the first UD layer 40, and the carbon fibers 50 in the second UD layer 42. According to the present embodiment, the first matrix resin 52 is formed by making a first base matrix resin in a first prepreg 38a (refer to FIG. 7), which serves as the cloth layer 38, a second base matrix resin in a second prepreg 40a (refer to FIG. 7), which serves as the first UD layer 40, and a third base matrix resin in a third prepreg 42a (refer to FIG. 7), which serves as the second UD layer 42, compatible with each other. More specifically, the base material 36 is formed by impregnating the single first matrix resin 52 in the three carbon fiber layers. The first base matrix resin to the third base matrix resin are not shown separately.

A composite layer 54 is laminated on the base material 36. The surface structural material 32 further includes a fiber layer 56 provided within the composite layer 54. In this case, the fiber layer 56 is a layered fabric material similar to the cloth layer 38 that constitutes the base material 36. Similar to that of the cloth layer 38, the weaving method of the fiber layer 56 is not particularly limited, and may be a plain weave, a twill weave, or a satin weave.

In addition to the above-described fiber layer 56, the composite layer 54 further includes the lightning protection structure 34. The lightning protection structure 34 includes the second matrix resin 58 that constitutes the composite layer 54, and a conductive layer 60. The conductive layer 60 is made from a layered conductor. When the composite layer 54 is laminated on the base material 36, the fiber layer 56 is positioned between the conductive layer 60 and the base material 36.

As a specific example of the conductor, there may be cited a metal mesh 62 as shown in FIG. 3. At a time when the multicopter 10 is struck by lightning, the lightning current is conveyed through the metal mesh 62, and flows toward the static dischargers 24 (refer to FIG. 1). The metal mesh 62 is preferably made from copper or aluminum. A copper mesh or an aluminum mesh is a satisfactory electrical conductor, and further, possesses a superior resistance to weather. In the case that an aluminum mesh is used, it is desirable to subject the aluminum mesh to a pretreatment. Such a pretreatment is performed in order to prevent electrolytic corrosion from occurring between the aluminum and the carbon fibers in the fiber layer 56.

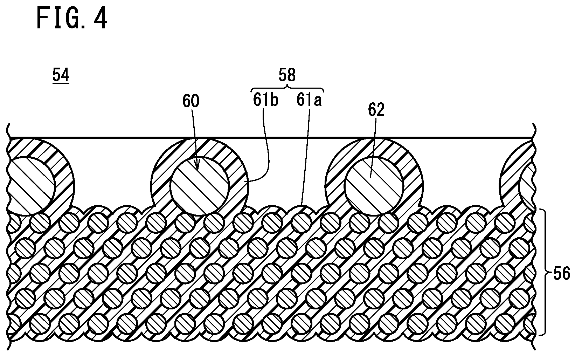

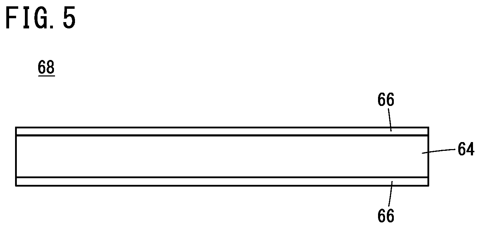

As shown in FIG. 4, in the composite layer 54, there may be cases in which the conductive layer 60 is in direct contact with the fiber layer 56. The second matrix resin 58 is impregnated into the fiber layer 56 and the conductive layer 60 which are in contact with each other in this manner. In other words, the second matrix resin 58 covers the fiber layer 56 and the conductive layer 60 so as to enclose them. Moreover, it should be noted that the term "impregnated" in the conductive layer 60 refers to a state in which the resin enters holes of the conductor. The holes, for example, are mesh openings of the metal mesh 62 shown in FIG. 3 and FIG. 4. Alternatively, the holes are pores in a non-woven fabric 64 (to be described later) shown in FIG. 5.

The second matrix resin 58 includes a first resin portion 61a impregnated into the fiber layer 56, and a second resin portion 61b impregnated into the conductive layer 60. As noted previously, since the second matrix resin 58 collectively covers the fiber layer 56 and the conductive layer 60, an interface does not exist between the first resin portion 61a and the second resin portion 61b. Namely, the second matrix resin 58 is a single resin layer. As will be discussed later, the second matrix resin 58 fulfills a role as a binding resin that bonds the base material 36 and the composite layer 54 together.

In the case that the fiber layer 56 and the conductive layer 60 are in contact with each other, then between both of the layers 56 and 60, a portion is produced where the first resin portion 61a and the second resin portion 61b are not formed. More specifically, in this case, the conductive layer 60 includes a portion in direct contact with the fiber layer 56. Moreover, the entirety of the conductive layer 60 may also be placed in direct contact with the fiber layer 56. Further, a portion of the conductive layer 60 may be in contact with the fiber layer 56, while in addition, a remaining portion of the conductive layer 60 may be laminated on the fiber layer 56 via a thin layer made up from the second matrix resin 58. Such a thin layer is formed from the second matrix resin 58 that has inevitably entered between the fiber layer 56 and the conductive layer 60. A typical thickness of the thin layer is on the order of several tens of nanometers to a few micrometers, but can reach to from 20 µm to 30 µm.

Between the fiber layer 56 and the conductive layer 60, a thin layer of the second matrix resin 58 may be interposed throughout the entirety thereof. In this case, the conductive layer 60 is not in contact with the fiber layer 56. Moreover, the thin layer is formed from the second matrix resin 58 that has inevitably entered between the fiber layer 56 and the conductive layer 60. A typical thickness of the thin layer is on the order of several tens of nanometers to a few micrometers. However, the thickness of the thin layer can reach to from 20 µm to 30 µm.

In the conventional technique, a resin film covers the entirety of the conductor, and thereafter, the conductor is bonded to the surface structural material. In this case, the majority of the resin film does not contribute to the bond. In contrast thereto, in the present embodiment, as noted previously, between both of the layers 56 and 60, a portion is produced where the first resin portion 61a and the second resin portion 61b are not formed. In addition, as will be discussed later, the majority of the second matrix resin 58 acts as a binding resin that binds the composite layer 54 to the base material 36. For the foregoing reasons, in comparison with the conventional technique, it is possible to reduce the amount of the binding resin that is used.

It is more preferable for the first matrix resin 52 and the second matrix resin 58 to be made compatible, and be made in the form of a single matrix resin. In this case, the four carbon fiber layers and one conductive layer 60 are impregnated with the single matrix resin. In this case, an interface is not formed between the first matrix resin 52 and the second matrix resin 58. However, in FIG. 2, a line is added between the first matrix resin 52 and the second matrix resin 58 for convenience and in order to facilitate the distinction between both of the resins 52 and 58.

As a suitable example of the first matrix resin 52 (the first base matrix resin, the second base matrix resin, and the third base matrix resin), there may be cited an epoxy resin. As a suitable example of the second matrix resin 58 (the binding resin), there may also be cited an epoxy resin. However, the first matrix resin 52 and the second matrix resin 58 are not limited to being epoxy resins. The first base matrix resin, the second base matrix resin, and the third base matrix resin are preferably resins that are made compatible with each other. The first matrix resin 52 and the second matrix resin 58 (the binding resin) are preferably resins that are made compatible with each other.

The amount of the matrix resin in a general prepreg is about 130 g per 1 m² of the prepreg. Further, in the above-described conventional technique, the amount of the resin film used in order to sufficiently cover the conductor is about 150 g to 170 g per 1 m² of the conductor. More specifically, in the conventional technique, when the conductor is joined to the surface structural material via the resin film, the total amount of the matrix resin in the outermost fiber reinforced resin layer, and the resin film covering the conductor overlaid on the fiber layer is 280 g/m² to 300 g/m².

In contrast thereto, in the present embodiment, the amount of the second matrix resin 58 per 1 m² of the composite layer 54 can be 275 g or less. The amount of the second matrix resin 58 per 1 m² of the composite layer 54 can be, for example, less than or equal to 150 g, and can also be 120 g. Therefore, according to the present embodiment, the wall-thickness and the weight of the lightning protection structure 34 can be reduced. Accordingly, the wall-thickness and the weight of the multicopter 10 as a whole can be reduced.

In the case that the conductor is the metal mesh 62 such as a copper mesh or an aluminum mesh or the like, and when the thickness of the fiber composite material 30 is T1 (refer to FIG. 2) and the thickness of the conductive layer 60 is T2, then, for the following reasons, the ratio of T1 to T2 should preferably lie within a range of 10 : 1 to 80 : 1. More specifically, it is preferable for the following equation to be established.
T1 : T2 = 10 : 1 to 80 : 1

Since T2 is generally 0.05 mm to 0.08 mm, the preferred range for T1 lies within a range of from 0.5 mm to 6.4 mm.

When T1 is less than 10 times T2, the base material 36 or the like becomes thin-walled. Accordingly, a concern arises in that the fiber composite material 30 may not be formed with a sufficient strength. On the other hand, when T1 is greater than 80 times T2, the base material 36 or the like becomes thick-walled. As a result, since the weight of the fiber composite material 30 is increased, the multicopter 10 becomes thick-walled and the weight thereof is increased. Further, since a large amount of the carbon fibers 46, 48, and 50 is used, the material cost in order to obtain the fiber composite material 30 and the multicopter 10 is increased.

As another specific example of the conductor, as shown in FIG. 5, the non-woven fabric 64 whose surface is coated with a metal may be cited. Hereinafter, the non-woven fabric 64 and a coating metal 66 are collectively referred to as a coated non-woven fabric 68. As the coating metal 66, silver, copper, titanium, or aluminum is preferably used. The non-woven fabric 64 which is coated with silver, copper, titanium, or aluminum, in the same manner as the metal mesh 62, is a satisfactory electrical conductor, and further, possesses a superior resistance to weather. Since the coated non-woven fabric 68 is lighter in weight than the metal mesh 62, the weight of the fiber composite material 30 and the multicopter 10 can be further reduced.

In the case that the conductor is the above-described coated non-woven fabric 68, and when the thickness of the fiber composite material 30 is T1 (refer to FIG. 2) and the thickness of the conductive layer 60 is T3, the ratio of T1 to T3 should preferably lie within a range of 4.5 : 1 to 25 : 1. More specifically, it is preferable for the following equation to be established.
T1 : T3 = 4.5 : 1 to 25 : 1

Since T3 is generally 0.15 mm to 0.20 mm, the preferred range for T1 lies within a range of from 0.675 mm to 5 mm.

When T1 is less than 4.5 times T3, the base material 36 or the like becomes thin-walled. Accordingly, a concern arises in that the fiber composite material 30 may not be formed with a sufficient strength. On the other hand, when T1 is greater than 25 times T3, the base material 36 or the like becomes thick-walled. As a result, since the weight of the fiber composite material 30 is increased, the multicopter 10 becomes thick-walled and the weight thereof is increased. Further, since a large amount of the carbon fibers 46, 48, and 50 is used, the material cost in order to obtain the fiber composite material 30 and the multicopter 10 is increased.

At a time when the multicopter 10 which is constituted as described above is struck by lightning, the lightning current is conveyed through the coating metal 66, and flows toward the static dischargers 24 (refer to FIG. 1).

The lightning current that has flowed to the static dischargers 24 is discharged into the air via the static dischargers 24. In accordance with this feature, the surface structural material 32 of the multicopter 10 is prevented from being damaged due to being struck by lightning. In the foregoing manner, according to the present embodiment, while making the fiber composite material 30 and the multicopter 10 both thinner and lighter in weight, it is possible to prevent the surface structural material 32 from being damaged when struck by lightning.

As shown in FIG. 2 and FIG. 3, the base material 36 that constitutes the fiber composite material 30 includes the cloth layer 38, the first UD layer 40, and the second UD layer 42. In the first UD layer 40, the carbon fibers 48 are aligned in one direction, and further, in the second UD layer 42, the carbon fibers 50 are aligned in one direction that differs from that in which the carbon fibers 48 in the first UD layer 40 are aligned. Therefore, by combining the first UD layer 40 and the second UD layer 42, the strength of the base material 36 in the two directions is increased. One of the two directions is a direction in which the carbon fibers 48 are aligned in the first UD layer 40. The remaining one of the two directions is a direction in which the carbon fibers 50 are aligned in the second UD layer 42. Since the first UD layer 40 and the second UD layer 42 are comparatively less expensive than the cloth layer 38, the strength of the base material 36 can be enhanced at a lower cost.

As shown in FIG. 3, preferably, the first carbon fibers 44 and the second carbon fibers 46 in the cloth layer 38 are aligned in a manner so as to intersect at an angle of approximately 45° with the directions in which the carbon fibers 48 and 50 are aligned. Accordingly, in the base material 36, the strength in a direction that intersects with the above-described two directions is also increased. As a result, the base material 36 has sufficient resistance to impacts from a plurality of directions, and exhibits sufficient strength.

Furthermore, the fiber layer 56 enhances the strength of the surface structural material 32. For the foregoing reasons, the surface structural material 32 has sufficient resistance to impacts from a plurality of directions, and exhibits sufficient strength. In the case that the fiber composite material 30 is used in a flying object, it is preferable for the fiber layer 56 to be formed from the fabric material (the cloth layer).

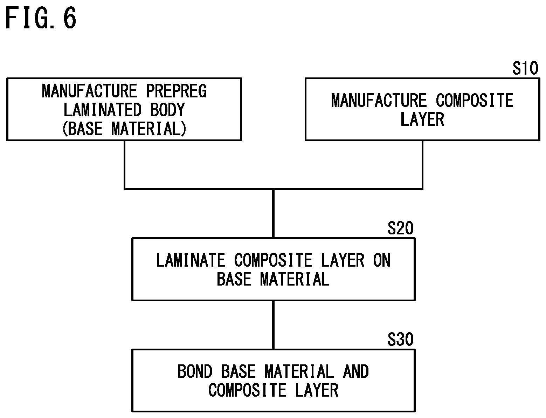

Next, with reference to the schematic flow diagram shown in FIG. 6, a method of manufacturing the fiber composite material 30 will be described. The method of manufacturing according to the present embodiment includes a first step S10 of obtaining the composite layer 54, a second step S20 of laminating the composite layer 54 on the base material 36, and a third step S30 of bonding the base material 36 and the composite layer 54.

It should be noted that the base material 36 is manufactured separately from the first step S10 to the third step S30. Specifically, as shown in FIG. 7, the first prepreg 38a, the second prepreg 40a, and the third prepreg 42a are laminated in this order from below, and thereby the base material 36, which is made up from the prepreg laminated body, is obtained. In this instance, the first prepreg 38a is a prepreg in which the first base matrix resin is impregnated into a fabric material containing the first carbon fibers 44 and the second carbon fibers 46 (refer to FIG. 3). The second prepreg 40a is a prepreg in which the second base matrix resin is impregnated into a UD material containing the carbon fibers 48. The third prepreg 42a is a prepreg in which the third base matrix resin is impregnated into a UD material containing the carbon fibers 50.

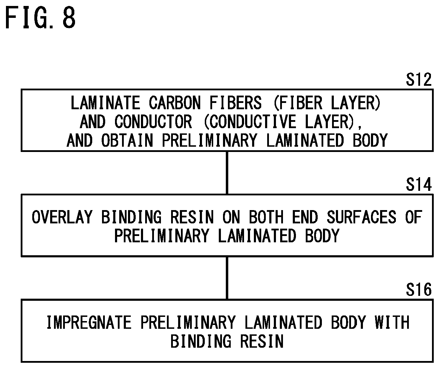

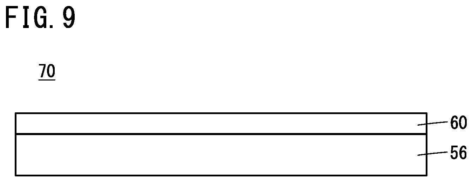

The first step S10 is performed separately from the step described above. As shown in the schematic flow diagram in FIG. 8, the first step S10 includes a preliminary lamination step S12, a resin overlaying step S14, and an impregnation step S16. In the preliminary lamination step S12, sheet-shaped (layered) carbon fibers that form the fiber layer 56, and a conductor that forms the conductive layer 60, are laminated. Consequently, a layered preliminary laminated body 70, which is shown in FIG. 9, is obtained. In the preliminary laminated body 70, one end surface (a lower surface) of the conductive layer 60 is placed in contact with one end surface (an upper surface) of the fiber layer 56. Moreover, the conductor, for example, is the metal mesh 62 as described above. Alternatively, the conductor is the coated non-woven fabric 68 as described above.

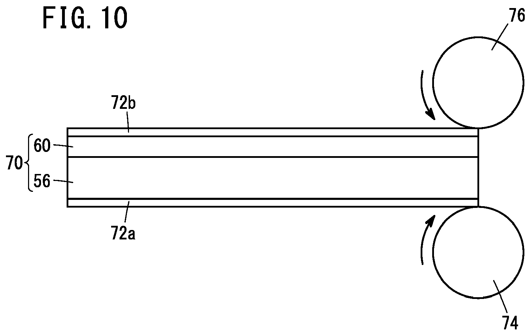

Next, as shown in FIG. 10, in the resin overlaying step S14, binding resins 72a and 72b are overlaid respectively on both end surfaces of the preliminary laminated body 70. In this instance, the total amount of the binding resins 72a and 72b that are overlaid on both end surfaces of the preliminary laminated body 70 is preferably, for example, about 120 g to 150 g per 1 m² of the preliminary laminated body 70. More specifically, it is sufficient for the total amount of the binding resins 72a and 72b that are impregnated into the preliminary laminated body 70 to be approximately the same amount of the matrix resin that is used in a general prepreg.

Next, in the impregnation step S16, the preliminary laminated body 70 with the binding resins 72a and 72b overlaid thereon is sandwiched between a pair of rollers 74 and 76 shown in FIG. 10. When the preliminary laminated body 70 passes between the pair of rollers 74 and 76, the binding resins 72a and 72b are crushed and spread by the pair of rollers 74 and 76. In accordance with this feature, the binding resins 72a and 72b are impregnated into the fiber layer 56 and the conductive layer 60. As a result, as shown in FIG. 4, the composite prepreg (the composite layer 54) is obtained in which the fiber layer 56 and the conductive layer 60 are enclosed within the second matrix resin 58. Moreover, the second matrix resin 58 may be filled into the mesh openings of the metal mesh 62. The second matrix resin 58 may also be filled into gaps between the carbon fibers in the fiber layer 56.

As noted previously, the second matrix resin 58 includes the first resin portion 61a impregnated into the fiber layer 56, and the second resin portion 61b impregnated into the conductive layer 60. However, the second matrix resin 58 is a single resin layer, and an interface does not exist between the first resin portion 61a and the second resin portion 61b. A part of the first resin portion 61a or the second resin portion 61b may enter between the fiber layer 56 and the conductive layer 60. In this case, the above-described thin layer is formed between the fiber layer 56 and the conductive layer 60.

The composite layer 54 is made up from the composite prepreg that includes the fiber layer 56 and the conductive layer 60. Accordingly, the thickness T2 and the weight of the composite layer 54 are of a degree such that the thickness and the weight of the conductive layer 60 are added to a general prepreg. Therefore, it is possible to achieve a reduction in the thickness and a reduction in the weight of the composite layer 54 that includes the lightning protection structure 34.

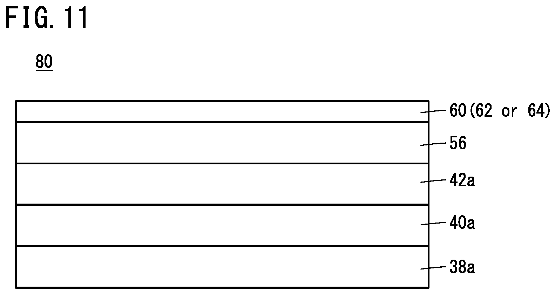

Next, the second step S20 and the third step S30 are performed using the base material 36 and the composite layer 54 which are obtained in the manner described above. Specifically, in the second step S20, the composite layer 54 is laminated on the base material 36. At this time, the composite layer 54 is laminated on the base material 36 in a manner so that the fiber layer 56 is positioned between the conductive layer 60 and the base material 36. Accordingly, a molding material 80 shown in FIG. 11 is obtained.

Next, in the third step S30, the base material 36 and the composite layer 54 are bonded together via the second matrix resin 58. Specifically, for example, co-curing is carried out on the molding material 80. Along therewith, the molding material 80 is molded into a shape that is suitable for the outer shape of the multicopter 10. More specifically, the base material 36 and the fiber layer 56 form the surface structural material 32 that is suitable for the outer shape of the multicopter 10, and the conductive layer 60 is formed into a shape that follows the shape of the surface structural material 32. Further, preferably, the first matrix resin 52 (the first base matrix resin, the second base matrix resin, and the third base matrix resin) of the base material 36, and the second matrix resin 58 (the binding resins 72a and 72b) of the composite layer 54 are made compatible.

When co-curing is carried out, heat is applied to the molding material 80. The first matrix resin 52 is cured by the heat, whereby the cloth layer 38, the first UD layer 40, and the second UD layer 42, which are bonded to each other, are formed. At the same time, the second matrix resin 58 is cured by the heat, whereby the composite layer 54 is bonded to the base material 36 via the second matrix resin 58. In the case that the first matrix resin 52 and the second matrix resin 58 are made compatible, the four carbon fiber layers and one conductive layer 60 are impregnated with the single matrix resin.

In this manner, the fiber composite material 30 is obtained. When the amount of the binding resins 72a and 72b used is about 120 g to 150 g per 1 m² of the preliminary laminated body 70, a relationship of T1 : T2 = 10 : 1 to 80 : 1 is established between the thickness T1 of the fiber composite material 30 (refer to FIG. 2) and the thickness T2 of the conductive layer 60 that is made from the metal mesh 62.

In the manner described above, it is also possible to use the coated non-woven fabric 68 as the conductive layer 60. In this case, when the amount of the binding resins 72a and 72b used is about 120 g to 150 g per 1 m² of the preliminary laminated body 70, a relationship of T1 : T3 = 4.5 : 1 to 25 : 1 is established between the thickness T1 of the fiber composite material 30 (refer to FIG. 2) and the thickness T3 of the conductive layer 60.

The resulting fiber composite material 30 is utilized in the multicopter 10 as the surface structural material 32 and the lightning protection structure 34. Since it is possible to make the composite layer 54 both thinner and lighter in weight, it is also possible to achieve a reduction in the thickness and a reduction in the weight of the surface structural material 32 of the multicopter 10.

As has been described above, the present embodiment is characterized by the fiber composite material (30) including the base material (36) made from a carbon fiber reinforced resin, and the composite layer (54) laminated on the base material, wherein the composite layer includes the fiber layer (56) made from the carbon fibers, the conductive layer (60) made from a conductor and superimposed on the fiber layer, and the matrix resin (58) that is impregnated into the fiber layer and the conductive layer, the matrix resin includes the first resin portion (61a) impregnated into the fiber layer, and the second resin portion (61b) impregnated into the conductive layer, the matrix resin being a single resin layer in which an interface does not exist between the first resin portion and the second resin portion, the fiber layer is positioned between the conductive layer and the base material, and the composite layer is bonded to the base layer via the matrix resin.

Further, the present embodiment is characterized by the method of manufacturing the fiber composite material (30) including the base material (36) made from a carbon fiber reinforced resin, the method of manufacturing the fiber composite material including the step (S10) of obtaining the composite layer (54) including the fiber layer (56) made from carbon fibers, the conductive layer (60) made from a conductor and superimposed on the fiber layer, and the matrix resin (58) made up from the single resin layer impregnated into the fiber layer and the conductive layer, the step (S20) of laminating the composite layer on the base material, in a manner so that the fiber layer is positioned between the conductive layer and the base material, and the step (S30) of bonding the base material and the composite layer via the matrix resin.

In the composite layer, the fiber layer and the conductive layer are impregnated with the single matrix resin (the aforementioned second matrix resin 58). The matrix resin acts as a binding resin that bonds the composite layer to the base material layer. Therefore, according to the present invention, it is not necessary to use a resin film as used in the conventional technique in order to bond the conductor to the surface structural material.

According to the present embodiment, in the manner described above, the majority of the matrix resin in the composite layer acts as a binding resin that bonds the composite layer to the base material layer. In addition, there may be cases in which the fiber layer and the conductive layer come into contact with each other, and a portion is produced where the binding resin is not interposed between both of the layers. For the foregoing reasons, the amount of the binding resin used can be made smaller than the amount of the resin film that is used in the conventional technique. Accordingly, it is easy to make the fiber composite material both thinner and lighter in weight. Further, the material cost can be made inexpensive.

As the binding resin, it is possible to select a matrix resin in a general prepreg. Such a matrix resin is comparatively inexpensive. Further, in the manner described above, the amount of the binding resin that is used is small. For the foregoing reasons, the material cost can be made less expensive.

In addition, since the matrix resin of the composite layer is bound to the base material, the bonding strength between the base material and the composite layer is high. Accordingly, the fiber composite material is superior in terms of strength and durability.

Furthermore, the composite layer includes the conductive layer. Therefore, for example, at a time when the fiber composite material is struck by lightning, the lightning current will be conveyed and flow through the conductive layer. In accordance with this feature, the fiber composite material is prevented from being damaged due to being struck by lightning.

The present embodiment discloses the method of manufacturing the fiber composite material, further including the step (S12) of superimposing the fiber layer and the conductive layer, and thereby obtaining the layered preliminary laminated body (70), the step (S14) of overlaying the binding resin (72a, 72b) on both end surfaces of the preliminary laminated body, and the step (S16) of impregnating the fiber layer and the conductive layer with the binding resin.

In this manner, the composite layer in which the fiber layer and the conductive layer are impregnated with the binding resin (the matrix resin) can be manufactured through the same process steps as when a general prepreg is obtained. Accordingly, it is possible to obtain the composite layer at a low cost. In addition, in the case that the binding resin is prevented from entering between the fiber layer and the conductive layer, a thin and lightweight composite layer can be obtained. The composite layer exhibits superior strength which is derived from the carbon fibers.

The present embodiment discloses the fiber composite material wherein the base material includes the cloth layer (38) containing the carbon fiber cloth, the first UD layer (40) in which the carbon fibers (48) are aligned in one direction, and the second UD layer (42) in which the carbon fibers (50) are aligned in one direction that differs from the one direction in which the carbon fibers in the first UD layer are aligned.

The present embodiment discloses the method of manufacturing the fiber composite material, wherein the base material is obtained using the first prepreg (38a) containing the carbon fiber cloth, the second prepreg (40a) in which the carbon fibers (48) are aligned in one direction, and the third prepreg (42a) in which the carbon fibers (50) are aligned in one direction that differs from the one direction in which the carbon fibers in the second prepreg are aligned.

In the cloth layer, the first carbon fibers and the second carbon fibers are aligned in different directions, and in this state, intersect one another. Accordingly, the cloth layer exhibits resistance to impacts from a plurality of directions.

Further, in the first UD layer, the carbon fibers are aligned in one direction, and in the second UD layer, the carbon fibers are aligned in one direction that differs from the one direction in which the carbon fibers in the first UD layer are aligned. Therefore, by combining the first UD layer and the second UD layer, the strength of the base material in the two directions is increased. One of the two directions is a direction in which the carbon fibers are aligned in the first UD layer. The remaining one of the two directions is a direction in which the carbon fibers are aligned in the second UD layer. Since the first UD layer and the second UD layer are comparatively less expensive than the cloth layer, the strength of the base material can be enhanced at a lower cost.

The fiber composite material includes the base material containing the cloth layer, the first UD layer, and the second UD layer that have been described above. Therefore, the fiber composite material has sufficient resistance to impacts from a plurality of directions, and exhibits sufficient strength.

The present embodiment discloses the fiber composite material wherein the amount of the matrix resin is less than or equal to 275 g per 1 m² of the composite layer.

The present embodiment discloses the method of manufacturing the fiber composite material, wherein the amount of the matrix resin is set to be less than or equal to 275 g per 1 m² of the composite layer.

In this manner, according to the present embodiment, the amount of the matrix resin in the composite layer can be sufficiently reduced. Accordingly, it is easy to make the composite layer both thinner and lighter in weight.

The present embodiment discloses the fiber composite material wherein the conductor is the metal mesh (62), and when the thickness of the fiber composite material is T1, and the thickness of the conductive layer is T2, the ratio T1 : T2 lies within a range of 10 : 1 to 80 : 1.

The present embodiment discloses the method of manufacturing the fiber composite material, wherein the conductor is formed from the metal mesh (62), and when the thickness of the fiber composite material is T1, and the thickness of the conductive layer is T2, the ratio T1 : T2 is set to be within a range of 10 : 1 to 80 : 1.

When T1 is smaller than 10 times T2, the base material (the carbon fiber reinforced resin) or the like becomes thin-walled. Accordingly, a concern arises in that the fiber composite material may not be formed with a sufficient strength. On the other hand, when T1 is greater than 80 times T2, the base material (the carbon fiber reinforced resin) or the like becomes thick-walled. As a result, the weight of the fiber composite material is increased. Further, since a large amount of the carbon fibers is used, the material cost in order to obtain the fiber composite material is increased.

Moreover, as the metal mesh, a copper mesh or an aluminum mesh is suitable. This is because a copper mesh or an aluminum mesh is light in weight and has a high electrical conductivity, and in addition, possesses a superior resistance to weather. In the case that an aluminum mesh is used, as discussed previously, it is desirable to subject the aluminum mesh to a pretreatment for preventing electrolytic corrosion.

The present embodiment discloses the fiber composite material wherein the conductor is the non-woven fabric (64) whose surface is coated with the metal, and when the thickness of the fiber composite material is T1, and the thickness of the conductive layer is T3, the ratio T1 : T3 lies within a range of 4.5 : 1 to 25 : 1.

The present embodiment discloses the method of manufacturing the fiber composite material, wherein the conductor is formed from the non-woven fabric (64) whose surface is coated with the metal, and when the thickness of the fiber composite material is T1, and the thickness of the conductive layer is T3, the ratio T1 : T3 is set to be within a range of 4.5 : 1 to 25 : 1.

The non-woven fabric whose surface is coated with the metal is lighter in weight than the metal mesh. Accordingly, in this case, it is possible to further reduce the weight of the composite layer and the fiber composite material.

In such a configuration, when T1 is smaller than 4.5 times T3, the base material (the carbon fiber reinforced resin) or the like becomes thin-walled. Accordingly, a concern arises in that the fiber composite material may not be formed with a sufficient strength. On the other hand, when T1 is greater than 25 times T3, the base material (the carbon fiber reinforced resin) or the like becomes thick-walled. As a result, the weight of the fiber composite material is increased, and the material cost in order to obtain the fiber composite material is increased.

Silver, copper, titanium, or aluminum is suitable as the coating metal. This is because silver, copper, titanium, or aluminum is light in weight and has a high electrical conductivity, and in addition, possesses a superior resistance to weather.

The present embodiment is characterized by the flying object (10), which is equipped with the surface structural material (32) containing the above-described base material and the above-described fiber layer, and the lightning protection structure (34) containing the above-described conductive layer.

More specifically, the flying object includes the above-described fiber composite material. As noted previously, since it is possible to make the fiber composite material both thinner and lighter in weight, it is also possible to achieve a reduction in the thickness and a reduction in the weight of the flying object. When the flying object is struck by lightning, the lightning current flows along the conductive layer that constitutes the lightning protection structure, and thus, damage to the surface structural material due to being struck by lightning is prevented.

The present invention is not limited to the above disclosure, and various modifications are possible without departing from the essence and gist of the present invention.

For example, one or more fiber reinforced resin layers may be added as needed to the base material 36.

A fiber composite material (30) includes a base material (36) and a composite layer (54). The composite layer includes a fiber layer (56) made from carbon fibers, a conductive layer (60) made from a conductor, and a matrix resin (58) impregnated into the fiber layer and the conductive layer. A first resin portion (61a) of the matrix resin is impregnated into the fiber layer, and a second resin portion (61b) of the matrix resin is impregnated into the conductive layer. The matrix resin is a single resin layer in which an interface does not exist between the first resin portion and the second resin portion. The composite layer is bonded to the base material via the matrix resin.

## Claims

1. A method of manufacturing a fiber composite material (30) including a base material (36) made from a carbon fiber reinforced resin, the method of manufacturing the fiber composite material comprising:
a step of obtaining the base material in which a first matrix resin is impregnated into a carbon fiber;
a step (S10) of obtaining a composite layer (54) including a fiber layer (56) that is a woven fabric made from carbon fibers, a conductive layer (60) made from a conductor and superimposed on the fiber layer, and a second matrix resin (58) made up from a single resin layer impregnated into the fiber layer and the conductive layer;
a step (S20) of laminating the composite layer on the base material including the first matrix resin, in a manner so that the fiber layer is positioned between the conductive layer and the base material; and
a step (S30) of bonding the base material including the first matrix resin and the composite layer including the second matrix resin via the second matrix resin.

2. The method of manufacturing the fiber composite material according to claim 1, wherein
the step of obtaining the composite layer includes:
a step (S12) of superimposing the fiber layer and the conductive layer, and thereby obtaining a preliminary laminated body (70) having a layered structure;
a step (S14) of overlaying a binding resin (72a, 72b) on both end surfaces of the preliminary laminated body; and
a step (S16) of impregnating the fiber layer and the conductive layer with the binding resin.

3. The method of manufacturing the fiber composite material according to claim 1 or 2, wherein
an amount of the matrix resin is set to be less than or equal to 275 g per 1 m² of the composite layer.

4. The method of manufacturing the fiber composite material according to any one of claims 1 to 3, wherein
the base material is obtained using a first prepreg (38a) containing a carbon fiber cloth, a second prepreg (40a) in which carbon fibers (48) are aligned in one direction, and a third prepreg (42a) in which carbon fibers (50) are aligned in one direction that differs from the one direction in which the carbon fibers in the second prepreg are aligned.

5. The method of manufacturing the fiber composite material according to any one of claims 1 to 4, wherein
the conductor is formed from a metal mesh, and when a thickness of the fiber composite material is T1, and a thickness of the conductive layer is T2, a ratio T1 : T2 is set to be within a range of 10 : 1 to 80 : 1.

6. The method of manufacturing the fiber composite material according to any one of claims 1 to 4, wherein
the conductor is formed from a non-woven fabric whose surface is coated with a metal, and when a thickness of the fiber composite material is T1, and a thickness of the conductive layer is T3, a ratio T1 : T3 is set to be within a range of 4.5 : 1 to 25 : 1.

## Patentansprüche

1. Verfahren eines Herstellens eines Faserkompositmaterials (30), umfassend ein Basismaterial (36), welches aus einem Kohlefaser-verstärkten Harz erzeugt ist, wobei das Verfahren eines Herstellens des Faserkompositmaterials umfasst:
einen Schritt eines Erhaltens des Basismaterials, bei welchem ein erstes Matrixharz in eine Kohlefaser imprägniert wird;
einen Schritt (S10) eines Erhaltens einer Kompositschicht (54), umfassend eine Faserschicht (56), welche ein Gewebe ist, welches aus Kohlefasern erzeugt ist, eine leitfähige Schicht (60), welche aus einem elektrischen Leiter erzeugt ist und welche die Faserschicht überlagert, und ein zweites Matrixharz (58), welches aus einer einzelnen Harzschicht erzeugt ist, welche in die Faserschicht und die leitfähige Schicht imprägniert wird;
einen Schritt (S20) eines Laminierens der Kompositschicht auf das Basismaterial, welches das erste Matrixharz umfasst, auf eine Weise, so dass die Faserschicht zwischen der leitfähigen Schicht und dem Basismaterial positioniert wird; und
einen Schritt (S30) eines Verbindens des Basismaterials, welches das erste Matrixharz umfasst, und die Kompositschicht, welche das zweite Matrixharz umfasst, mittels des zweiten Matrixharzes.

2. Verfahren eines Herstellens des Faserkompositmaterials nach Anspruch 1, wobei
der Schritt des Erhaltens der Kompositschicht umfasst:
einen Schritt (S12) eines Überlagerns der Faserschicht und der leitfähigen Schicht, und dadurch ein Erhalten eines vorläufig laminierten Körpers (70), welcher eine geschichtete Struktur aufweist;
einen Schritt (S14) eines Überziehens eines Bindeharzes (72a, 72b) an beiden Endflächen des vorläufig laminierten Körpers; und
einen Schritt (S16) eines Imprägnierens der Faserschicht und der leitfähigen Schicht mit dem Bindeharz.

3. Verfahren eines Herstellens des Faserkompositmaterials nach Anspruch 1 oder 2, wobei
eine Menge des Matrixharzes als weniger als oder gleich wie 275 g pro 1 m² der Kompositschicht festgelegt wird.

4. Verfahren eines Herstellens des Faserkompositmaterials nach einem der Ansprüche 1 bis 3, wobei
das Basismaterial unter Verwendung eines ersten Prepregs (38a), welcher einen Kohlefaserstoff enthält, eines zweiten Prepregs (40a), in welchem Kohlefasern (48) in einer Richtung aligniert sind, und eines dritten Prepregs (42a) erhalten wird, in welchem Kohlefasern (50) in einer Richtung aligniert sind, welche von der einen Richtung verschieden ist, in welcher die Kohlefasern in dem zweiten Prepreg aligniert sind.

5. Verfahren eines Herstellens des Faserkompositmaterials nach einem der Ansprüche 1 bis 4, wobei
der elektrische Leiter aus einem Metallgitter gebildet ist und, wenn eine Dicke des Faserkompositmaterials T1 ist und eine Dicke der leitfähigen Schicht T2 ist, ein Verhältnis T1 : T2 als innerhalb eines Bereichs von 10 : 1 bis 80 : 1 festgelegt wird.

6. Verfahren eines Herstellens des Faserkompositmaterials nach einem der Ansprüche 1 bis 4, wobei
der elektrische Leiter aus einem Vliesstoff gebildet ist, dessen Oberfläche mit einem Metall beschichtet ist, und, wenn eine Dicke des Faserkompositmaterials T1 ist und eine Dicke der leitfähigen Schicht T3 ist, ein Verhältnis T1 : T3 als innerhalb eines Bereichs von 4,5 : 1 bis 25 : 1 festgelegt wird.

## Revendications

1. Procédé de fabrication d'un matériau composite à fibres (30) comprenant un matériau de base (36) constitué d'une résine renforcée de fibres de carbone, le procédé de fabrication du matériau composite à fibres comprenant :
une étape d'obtention du matériau de base dans lequel une première résine de matrice est imprégnée dans une fibre de carbone ;
une étape (S10) d'obtention d'une couche composite (54) comprenant une couche de fibres (56) qui est un tissu tissé constitué de fibres de carbone, une couche conductrice (60) constituée d'un conducteur et superposée sur la couche de fibres, et une seconde résine de matrice (58) constituée d'une couche de résine unique imprégnée dans la couche de fibres et la couche conductrice ;
une étape (S20) de stratification de la couche composite sur le matériau de base comprenant la première résine de matrice, de manière que la couche de fibres soit positionnée entre la couche conductrice et le matériau de base ; et
une étape (S30) de liaison du matériau de base comprenant la première résine de matrice et de la couche composite comprenant la seconde résine de matrice via la seconde résine de matrice.

2. Procédé de fabrication du matériau composite à fibres selon la revendication 1, dans lequel
l'étape d'obtention de la couche composite comprend :
une étape (S12) de superposition de la couche de fibres et de la couche conductrice, et d'obtention ainsi d'un corps stratifié préliminaire (70) ayant une structure en couches ;
une étape (S14) de recouvrement d'une résine de liaison (72a, 72b) sur les deux surfaces d'extrémité du corps stratifié préliminaire ; et
une étape (S16) d'imprégnation de la couche de fibres et de la couche conductrice avec la résine de liaison.

3. Procédé de fabrication du matériau composite à fibres selon la revendication 1 ou 2, dans lequel
une quantité de la résine de matrice est fixée pour être inférieure ou égale à 275 g par 1 m² de la couche composite.

4. Procédé de fabrication du matériau composite à fibres selon l'une quelconque des revendications 1 à 3, dans lequel
le matériau de base est obtenu en utilisant un premier préimprégné (38a) contenant un tissu de fibres de carbone, un second préimprégné (40a) dans lequel des fibres de carbone (48) sont alignées dans une direction, et un troisième préimprégné (42a) dans lequel des fibres de carbone (50) sont alignées dans une direction qui diffère de la direction dans laquelle les fibres de carbone dans le second préimprégné sont alignées.

5. Procédé de fabrication du matériau composite à fibres selon l'une quelconque des revendications 1 à 4, dans lequel
le conducteur est formé à partir d'un treillis métallique, et lorsqu'une épaisseur du matériau composite à fibres est T1, et qu'une épaisseur de la couche conductrice est T2, un rapport T1 : T2 est fixé pour être dans une plage de 10 : 1 à 80 : 1.

6. Procédé de fabrication du matériau composite à fibres selon l'une quelconque des revendications 1 à 4, dans lequel
le conducteur est formé à partir d'un tissu non tissé dont la surface est revêtue d'un métal, et lorsqu'une épaisseur du matériau composite à fibres est T1, et qu'une épaisseur de la couche conductrice est T3, un rapport T1 : T3 est fixé pour être dans une plage de 4,5 : 1 à 25 : 1.
